# EUROPEAN PATENT APPLICATION

(11) **EP 0 857 606 A1**
(43) Date of publication of application: **12.08.1998**
(21) Application number: 98101521.7
(22) Date of filing: 29.01.1998
(51) Int. Cl.: B60N 2/22, B60N 2/16

(54) **A device for adjusting the position of a motorcar seat**

(30) Priority: 05.02.1997 IT TO970089
(71) Applicant: Proma S.r.l., 81020 San Nicola la Strada (Caserta) (IT)
(72) Inventor: Nicola, Giorgio Pino, 81020 San Nicola La Strada (CE) (IT)
(74) Representative: Fioravanti, Corrado

(57) **Abstract**

In a device for adjusting the position of a motorcar seat, there is comprised a mechanism driven by a rotatable element (6). A locking/unlocking device (13) capable of keeping the set position comprises: a fixed locking toothing (16); a slider (23) provided with a toothing (24) for selectively engaging the fixed toothing (16), the slider sliding in a rotatable guide (18) integrally with the rotatable driving element (6); and a rotatable actuating lever (37) integral with cam means (36) capable of engaging the slider (23). The locking/unlocking device (13) has an unlocked arrangement for adjusting the position of the motorcar seat, in which the slider is released from the fixed toothing by the cam means, and a locked arrangement in which the slider toothing (24) engages the fixed toothing, thereby fixing the angular position of the rotatable driving element (6).

## Description

### Field of the invention

The present invention pertains to a device for adjusting the position of a motorcar seat. More particularly, the invention relates to a device for adjusting the height of the seat or the inclination of the seat back, the device comprising a mechanism driven by the rotation of a rotatable element such as a toothed wheel.

### Background of the invention

As known, the front seats of modern motorcars are fitted with devices allowing to adjust the height of the whole seat and/or the inclination of the seat back relative to the seat. Such presently known devices are normally comprised of toothed wheels, and specially shaped connecting rods and levers.

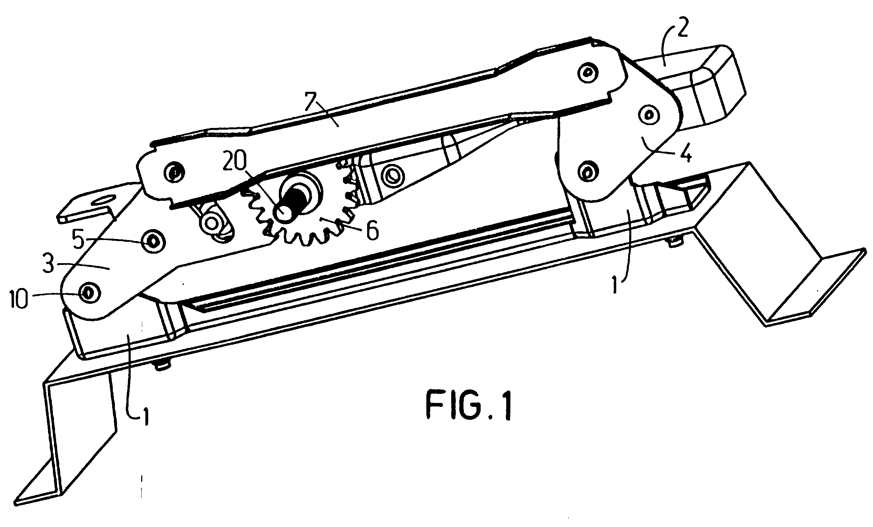

An example of such a prior art solution is shown in FIG. 1. A toothed lever 3 is pivotally mounted at 10 to a fixed support 1 secured to the vehicle floor. Toothed lever 3 is pivotally mounted at 5 to a first end of a mobile side member 2 integral with the seat (not shown). The other end of the mobile side member 2 is linked to both the fixed support 1 by means of a second lever 4 and the toothed lever 3 by means of a connecting rod 7. The connecting rod 7 connects the toothed lever 3 to lever 4. By virtue of the above described mechanism, the toothed lever 3 is rotated by rotating a toothed wheel 6. In accordance with the direction of rotation imparted to the toothed wheel 6, the mobile side member 2 is raised or lowered accomplishing a combined movement of translation and rotation in a vertical plane.

The above mentioned position adjusting system does not allow to keep the set position; a minimum load acting on the mobile side member 2 may suffice to take it back into its lower position.

### Summary of the invention

It is an object of the present invention to provide a rotary device to be coupled to a position adjusting system of the above cited kind, in order to control in a simple manner the rotating member (normally a toothed wheel) that lifts and lowers the seat or inclines the seat back, and keep the set arrangement.

These and further objects and advantages, that will be more apparent herein after, are accomplished in accordance with the present invention by the provision of a device for adjusting the position of a motorcar seat, the device comprising a mechanism driven by a rotatable element, characterised by comprising a locking/unlocking device capable of keeping the set position. The locking/unlocking device comprises:
a plurality of fixed locking seats;
a slider provided with locking means adapted for selectively engaging said locking seats, said slider sliding in a rotatable guide integrally with said rotatable driving element;
a rotatable actuating lever integral with cam means, said cam means being capable of engaging said slider; said locking/unlocking device having an unlocked arrangement for adjusting the position of the motorcar seat, in which the slider is free from said locking seats by means of said cam means, and a locked arrangement in which said locking means of the slider engage said locking seats, thereby fixing the angular position of the rotatable driving element.

### Brief description of the drawings

In order that the present invention may be well understood there will now be described a preferred embodiment thereof, given by way of example, reference being made to the accompanying drawings, in which:
- FIG. 1 is: a perspective view of a prior art device for adjusting the height of a motorcar seat;
- FIG. 2 is: a perspective view of a device for adjusting the height of a motorcar seat fitted with a device according to the present invention;
- FIG. 3 is: a perspective view of a rotary device showing its inner parts;
- FIG. 4 is: an axial cross sectional view of the complete rotary device; and
- FIGS. 5 to 10: are views showing in detail various components of the device of this invention.

### Detailed description of a preferred embodiment

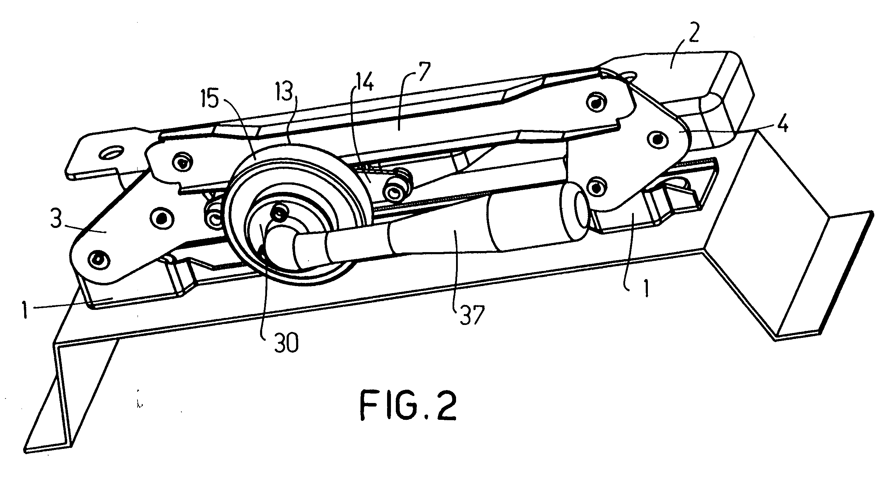

With reference initially to FIG. 2, numeral 13 designates a rotary device according to the present invention. The rotary device 13 is mounted to a conventional mechanism for adjusting the height of a motorcar seat, as discussed in the introductory part of the description.

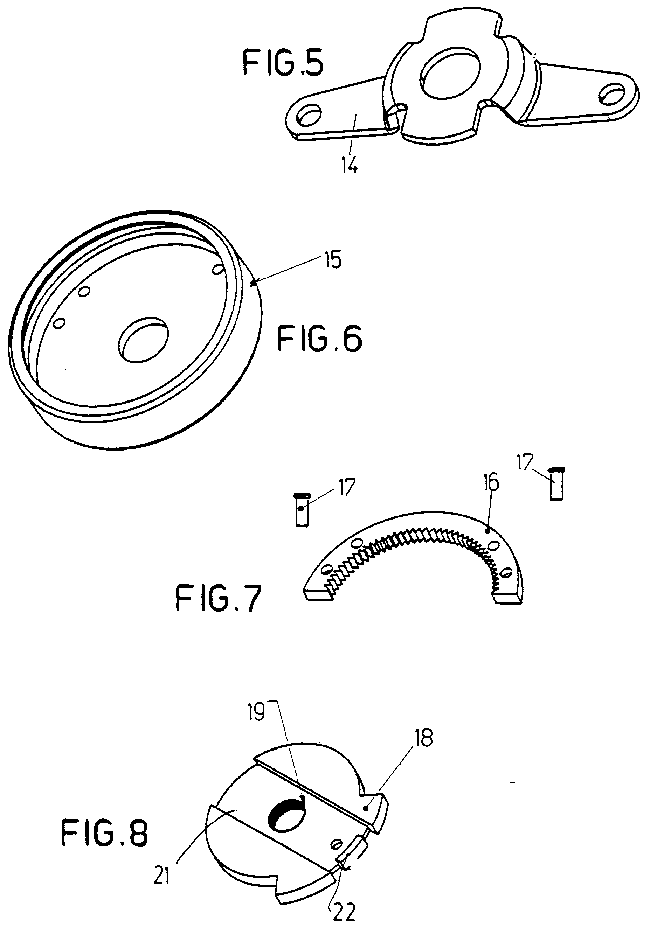

The rotary device 13 comprises a bracket 14, shown separately in FIG. 5, for mounting to the fixed, supporting part of the seat adjusting device. The bracket 14 is rigidly fixed to a cup-shaped body 15, separately shown in FIG. 6, preferably by riveting or welding. Fitted within cup body 15 is a toothed half-ring 16, separately shown in FIG. 7. The half-ring 16 is fastened to the cup body 15, for example by pins 17.

A flange 18 of substantially disc-like shape is fitted within the cup body 15. Flange 18 (separately shown in FIG. 8) is formed with a central splined bore 19 for coupling for rotation through a splined pin 20 to a toothed wheel of the kind designated at 6 in FIG. 1 and discussed in the preamble of the present description. Formed in flange 18 is a track 21 that crosses the flange diametrically and terminates with a stopping tooth 22.

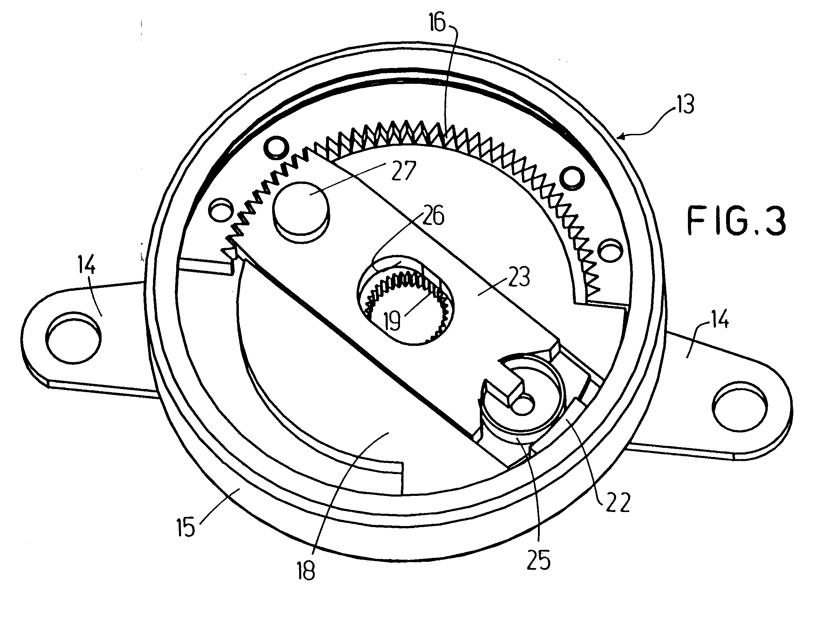

Slidably inserted in the track 21 is a slider 23 of elongate and flattened shape. The size of the slider 23 substantially corresponds to that of the track 21. A toothing 24 matching that of the half-ring 16 is provided at one end of the slider; the other end bifurcates so as to engage an elastic element, for example a C-shaped spring 25 interposed between the slider 23 and the stopping tooth 22 of flange 18. As shown in FIG. 3, the spring 25 tends to bias the slider 23 such that the end toothing 24 of the slider engages the toothing of half-ring 16. Formed in the centre of the slider 23 is an aperture 26, slightly elongated in the direction of the track 21 to allow the passage of the splined pin 20 (visible in FIG. 1) without hindering the sliding movement of the slider along the track 21. The slider forms an axially protruding projection 27 proximate to its toothed end.

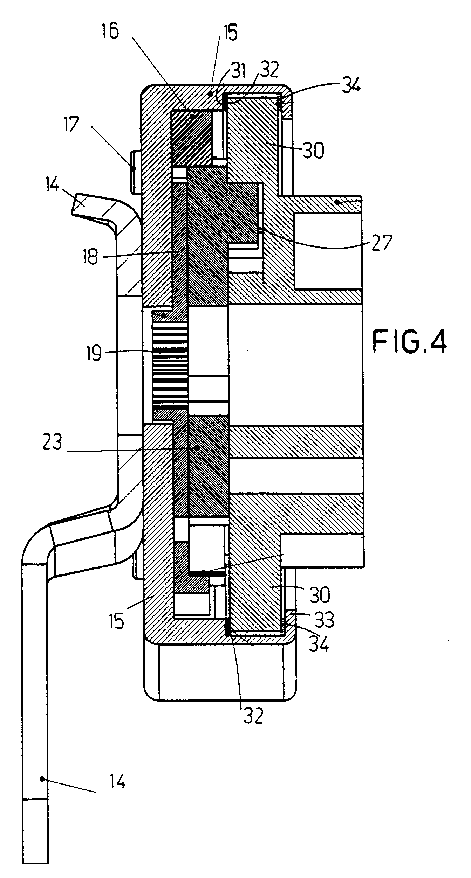

As illustrated in the cross sectional view of FIG. 4, the cup-shaped body 15 is closed by a cover 30, described in further detail herein after. The cover 30 bears upon a circumferential base 31 formed in the cup-shaped body 15 through a first antifriction gasket 32. The cover is closed by folding an edge 33 of the cup body 15 on the cover and interposing a second antifriction gasket 34 therebetween.

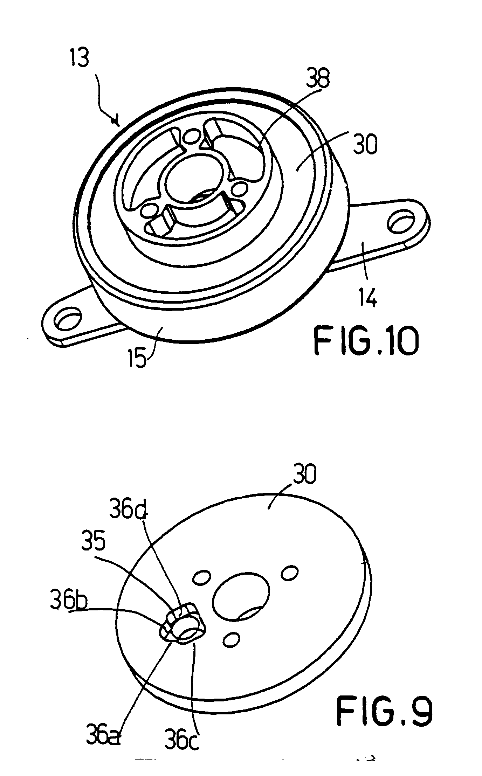

Referring to FIG. 9, the cover 30 forms a seat 35 in which there is engaged the projection 27 of slider 23. The walls of the seat 27 act as cams, forming a pair of curved or inclined surfaces 36a, 36b converging towards the peripheral part of the cover. In the example illustrated in FIG. 9, surfaces 36a, 36b are radiused forming a single curved surface concave towards the centre of the device. The cover 30 is fixed to a side actuating lever 37 and is rotatable therewith relative to the cup body 15. In FIG. 10 there is shown an insert 38 used to mount the actuating lever 37 to the cover 30.

Operation of the device is as follows. In normal conditions the toothing 24 of the slider engages the toothing of the half-ring 16 integral with the body of the rotary device 13. Therefore, the position of the toothed wheel 6 accomplishing the lifting movement of the seat and which is fast for rotation with the disc flange 18 and the slider 23 is locked.

When it is desired to change the height of the seat, it is necessary to raise or lower the actuating lever 37. This movement causes the cover 30 to rotate. In the initial phase of rotation, one of the two inclined surfaces 36a or 36b (in accordance with the direction of rotation being imparted) urges the slider projection 27 towards the centre of the device, against the bias of elastic element 25. Being guided along the track 21, the slider 23 disengages its own toothing 24 from that of the fixed half-ring 16. The slider projection 27 slides along the inclined or curved surface 36a (or 36b) and comes into contact with a radial wall 36c (or 36d) of the same seat 35. In rotating fast with the actuating lever 37, said radial wall rotates the projection 27 and therefore also the slider 23, the flange 18 (in which the slider is slidably inserted) and the toothed wheel 6 connected to the flange 18 by means of splined pin 20. Rotation of the toothed wheel 6 causes the seat to raise or lower, as mentioned in the preamble.

Upon reaching the desired height, the actuating lever 37 is stopped, whereby the spring 25 is free to extend and push the slider 23 radially outwardly until the slider toothing 24 engages that of the half-ring 16. Consequently, the toothed wheel is locked in position and the height of the seat is fixed.

It will be appreciated that the adjusting movement is facilitated by the actuating lever 37, so that the user is able to lower and, particularly, lift his/her own seat while remaining seated thereon.

While a specific embodiment of the invention has been disclosed, it is to be understood that such disclosure has been merely for the purpose of illustration and that the invention is not to be limited in any manner thereby. Various modifications will be apparent to those skilled in the art in view of the foregoing example. The same principle as disclosed above may be equally applied with minor modifications, to adjust and maintain the inclination of a seat back.

## Claims

1. A device for adjusting the position of a motorcar seat, the device comprising a mechanism driven by a rotatable element (6), characterised by comprising a locking/unlocking device (13) capable of keeping the set position, said locking/unlocking device (13) comprising:
a plurality of fixed locking seats (16);
a slider (23) provided with locking means (24) adapted for selectively engaging said locking seats, said slider sliding in a rotatable guide (21) integrally with said rotatable driving element (6);
a rotatable actuating lever (37) integral with cam means (36), said cam means being capable of engaging said slider (23);
said locking/unlocking device (13) having an unlocked arrangement for adjusting the position of the motorcar seat, in which the slider is released from said locking seats by means of said cam means, and a locked arrangement in which said locking means (24) of the slider engage said locking seats, thereby fixing the angular position of the rotatable driving element (6).

2. A device as claimed in claim 1, characterised in that said cam means consist of the walls (36a, 36b, 36c, 36d) of a seat (35) formed in a rigid element (30) fast for rotation with the actuating lever (37), said slider having a projection (27) inserted in said seat (35).

3. A device as claimed in claim 2, characterised in that said walls of said seat (35) form a pair of curved or inclined surfaces (36a, 36b) converging in a radially outwardly direction.

4. A device as claimed in claim 3, characterised in that said surfaces (36a, 36b) are radiused forming a single curved surface concave towards the centre of the device.

5. A device as claimed in claim 1, characterised in that said locking seats consist of a toothing (16) arranged as a circular arch, said locking means (24) consisting of a corresponding toothing formed at one end of the slider (23).

6. A device as claimed in claim 1, characterised in that in said unlocked arrangement said slider (23) is released against the bias of an elastic element (25).
